# DEMANDE DE BREVET EUROPEEN

(11) **EP 2 530 045 A1**
(43) Date de publication de la demande: **05.12.2012**
(21) Numéro de dépôt: 11305667.5
(22) Date de dépôt: 31.05.2011
(51) Int. Cl.: B66C 1/12, F16G 11/00

(54) **Dispositif de protection d'un cable**

(71) Demandeur: Fehr, 67100 Reichshoffen (FR)
(72) Inventeur: Fehr, Pierre, 67500 HAGUENAU (FR)
(74) Mandataire: Rhein, Alain

(57) **Abrégé**

L'invention concerne un dispositif (1) de protection d'un câble, équipant ou destiné à équiper un objet à manutentionner, ce dispositif (1) comportant un insert déformable (2), destiné à être interposé entre ce câble et un organe que comporte un engin de manutention de cet objet, et comportant un moyen (3) pour recevoir ce câble ainsi qu'un moyen (4) pour coopérer avec cet organe.

## Description

La présente invention a trait à un dispositif de protection d'un câble équipant ou destiné à équiper un objet à manutentionner, plus particulièrement un mur préfabriqué.

Cette invention concerne le domaine de la manutention d'objets lourds auxquels est associé au moins un câble qu'il convient d'associer, notamment par accrochage, à un organe que comporte un engin de manutention, ceci en vue de la manutention d'un tel objet.

Cette invention trouvera une application particulièrement appropriée, mais aucunement limitative, lorsqu'il s'agit de manutentionner un mur préfabriqué, notamment un mur à coffrage intégré comportant deux peaux entretoisées.

En fait, tel mur préfabriqué comporte au moins un câble, usuellement métallique, comportant deux extrémités associées, soit à une même peau, soit chacune à une peau différente du mur, notamment en étant noyées à l'intérieur du matériau d'une telle peau. Un tel câble présente une portion intermédiaire, comprise entre les deux extrémités, et conçue pour être associée à un organe, usuellement un crochet, que comporte un engin de manutention, ceci pour la manutention du mur.

A ce propos, on observera qu'un tel organe peut être en mauvais état et présenter des dégradations qui, lorsque le câble est suspendu ou accroché à un tel organe, sont susceptibles d'endommager et/ou de blesser ce câble.

Lorsque ce câble est blessé ou endommagé, celui-ci est fragilisé et est susceptible de rompre sous l'effet du poids du mur entraînant ainsi la chute de ce mur. Une telle chute n'est aucunement acceptable dans un environnement (usine, chantier) où évoluent des personnes.

La présente invention se veut d'apporter une solution à ces problèmes.

A cet effet, l'invention concerne un dispositif de protection d'un câble, équipant ou destiné à équiper un objet à manutentionner, ce dispositif comportant un insert déformable, destiné à être interposé entre ce câble et un organe que comporte un engin de manutention de cet objet, et comportant un moyen pour recevoir ce câble ainsi qu'un moyen pour coopérer avec cet organe.

Les avantages de la présente invention consistent en ce que, lorsqu'un câble associé à un objet à manutentionner est équipé avec un dispositif de protection conforme à l'invention, ce câble est isolé par rapport à l'organe d'un engin de manutention de sorte que ce câble n'est aucunement en contact avec cet organe. Aussi, même lorsqu'un tel organe est en mauvais état, celui-ci ne peut cependant aucunement occasionner de dégradation au câble ce qui permet à ce câble de conserver son intégrité et de remplir sa fonction. Il est, alors, avantageusement, possible de garantir la sécurité des personnes et des biens lors de la manutention de cet objet.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

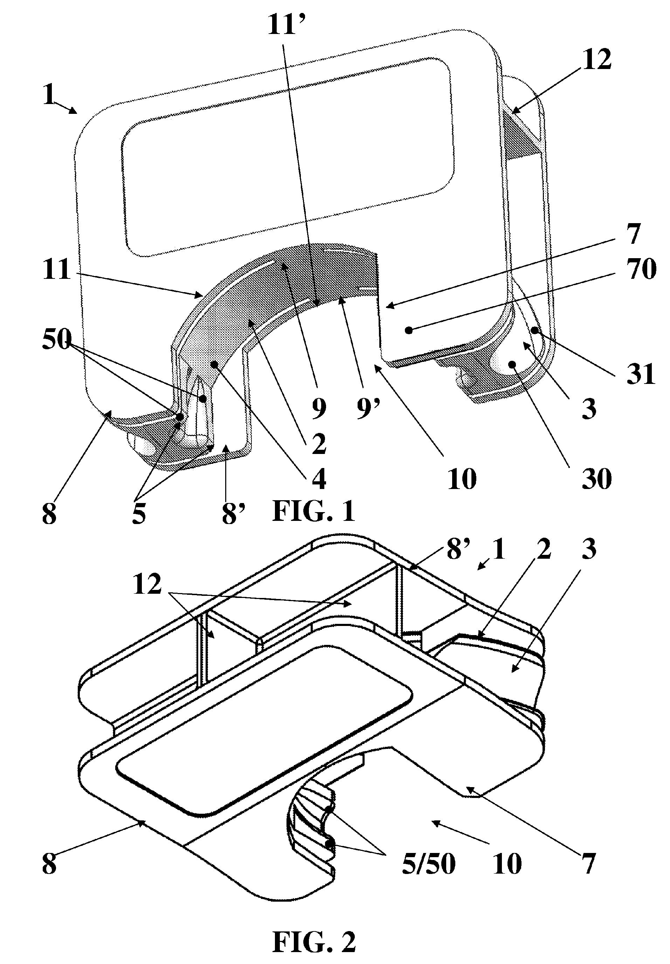

- la figure 1 est une vue schématisée et en perspective du dispositif conforme à l'invention ;
- la figure 2 est une vue schématisée similaire à la précédente, ceci sous un autre angle de visualisation ;
- la figure 3 est une vue schématisée et en coupe longitudinale du dispositif illustré figures 1 et 2 ;
- la figure 4 et une vue schématisée et en perspective d'un dispositif conforme à l'invention, auquel est associé un câble, et associé à un crochet d'un engin de manutention.

La présente invention concerne le domaine de la manutention d'objets lourds auxquels est associé au moins un câble qu'il convient d'associer à un organe que comporte un engin de manutention, ceci en vue de la manutention d'un tel objet.

En fait, l'invention concerne, plus particulièrement, un dispositif 1 de protection d'un câble C, équipant ou destiné à équiper un objet à manutentionner (non représenté).

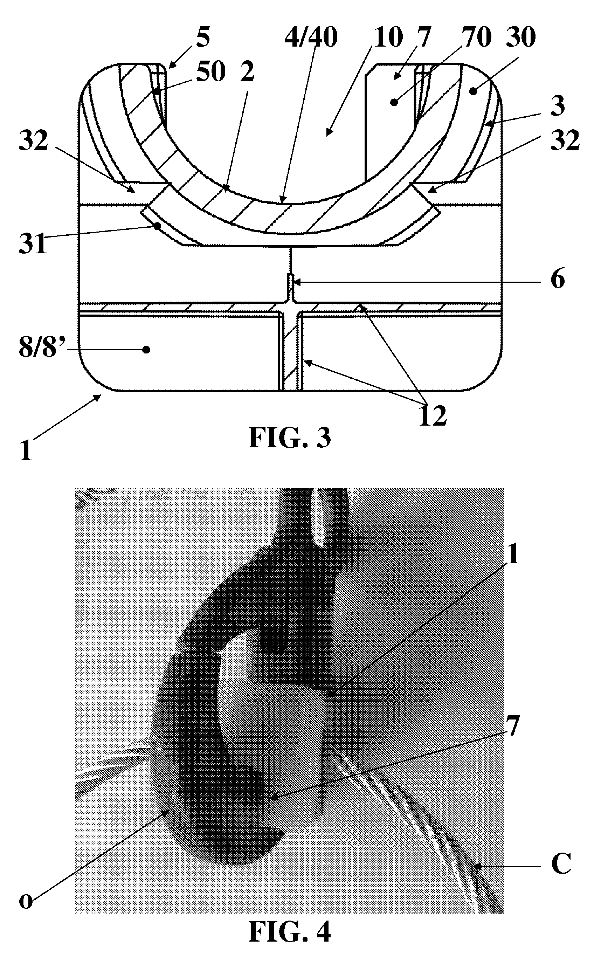

Un tel dispositif de protection 1 comporte un insert déformable 2, destiné à être interposé entre ce câble C et un organe O (plus particulièrement sous forme d'un crochet d'accrochage) que comporte un engin de manutention de cet objet, ceci tel qu'illustré figure 4.

Le caractère déformable de ce insert 2 permet, avantageusement, à cet insert 2 se s'adapter, voire de s'ajuster, à la configuration du câble C lorsque l'objet à manutentionner est suspendu sous ce câble C et/ou à la configuration de l'organe O auquel est associé ledit dispositif de protection 1.

Tel que visible sur les figures en annexe, cet insert déformable 2 présente une forme au moins en partie arquée, voire (et de préférence) en arc de cercle.

Une telle forme arquée permet, avantageusement, de faciliter la mise en place du câble C et/ou de l'organe O auquel est associé ledit dispositif de protection 1, ceci par rapport à ce dispositif 1.

Selon une autre caractéristique, cet insert déformable 2 comporte un moyen 3 pour recevoir ledit câble C.

En fait, ce moyen 3 pour recevoir ce câble C est défini sur au moins une portion externe de l'insert 2, notamment sur au moins une portion externe de la partie arquée de cet insert 2.

Tel que visible sur les figures en annexe, ce moyen 3 pour recevoir le câble C comporte un logement 30 à l'intérieur duquel vient de positionner ce câble C. Un tel logement 30 adopte, de préférence, la forme d'une gorge ou analogue.

Une caractéristique additionnelle consiste en ce que le logement 30 du moyen 3 pour recevoir le câble C est délimité par des bords latéraux 31 dans lesquels sont ménagées des échancrures 32.

La présence de ces échancrures 32 permet, avantageusement, de faciliter la déformation de l'insert 2 (forçage du pliage), ceci pour permettre à cet insert 2 de s'adapter à la configuration du câble C sous lequel est suspendu l'objet à manutentionner et/ou aux caractéristiques (dimensions et/ou configuration) de l'organe O de l'engin de manutention.

Selon une autre caractéristique, cet insert déformable 2 comporte un moyen 4 pour coopérer avec l'organe O de l'engin de manutention.

En fait, ce moyen 4 pour coopérer avec cet organe O est défini sur au moins une portion interne de l'insert 2, notamment sur au moins une portion interne de la partie arquée de cet insert 2.

Là encore, ce moyen 4 pour coopérer avec cet organe O comporte un logement 40 à l'intérieur duquel ledit organe O est apte à venir se loger.

Ce logement 40 adopte la forme d'un canal ou analogue et s'étend de manière sensiblement perpendiculaire et/ou transversale à la gorge du logement 30 du moyen 3 pour recevoir le câble C.

Selon une autre caractéristique, le dispositif de protection 1 comporte encore au moins un moyen 5 conçu pour prendre appui latéralement contre l'organe O que comporte l'engin de manutention, ceci plus particulièrement par déformation de l'insert 2 et sous l'effet du soulèvement de l'objet à manutentionner.

Tel que visible sur les figures en annexe, c'est, plus particulièrement, l'insert 2 qui comporte un tel moyen 5 pour prendre appui.

En fait, un tel moyen 5 pour prendre appui est constitué par au moins une nervure 50 et/ou au moins une cale s'étendant radialement par rapport audit insert 2 et à partir de cet insert 2, plus particulièrement radialement par rapport au moyen 4 pour recevoir ledit organe O et que comporte cet insert 2.

On observera qu'un tel moyen 5 pour prendre appui est défini et/ou incorporé à l'insert 2, plus particulièrement au moyen 4 pour coopérer avec l'organe O et que comporte cet insert 2, de préférence à l'une au moins des extrémités libres de ce insert 2 et/ou de ce moyen 4 pour coopérer avec cet organe O.

La présence de ce moyen 5 pour prendre appui permet, avantageusement, d'assurer une meilleure reprise des efforts de compression.

Une caractéristique additionnelle consiste en ce que le dispositif de protection 1 comporte au moins un moyen 6 pour immobiliser (plus particulièrement en translation) le dispositif de protection 1 par rapport au câble C.

Encore une autre caractéristique consiste en ce que le dispositif de protection 1 comporte au moins un moyen 7 pour positionner ce dispositif 1 par rapport à l'organe O de l'engin de manutention.

La présence de ce moyen 7 pour positionner permet, avantageusement, d'empêcher la giration du dispositif 1 par rapport à l'organe O de l'engin de manutention.

Tel que visible sur les figures en annexe, le dispositif de protection 1 selon l'invention comporte, également, deux flasques (8; 8') parallèles entre lesquels (8 ; 8') est positionné ledit insert déformable 2 et entre lesquels (8 ; 8') vient également se loger le câble C. Ce dispositif 1 comporte, également, au moins un moyen (9 ; 9') conçu pour rendre ledit insert déformable 2 solidaire d'au moins un tel flasque (8 ; 8'), voire (et de préférence) de ces deux flasques (8 ; 8').

En fait, un tel moyen (9 ; 9') pour rendre l'insert 2 solidaire d'un tel flasque (8 ; 8') est localisé à l'endroit ou à proximité de l'endroit où le dispositif 1 repose et/ou est en appui sur l'organe O.

A ce propos, on observera que l'insert déformable 2 comporte au moins une portion, jouxtant un tel moyen (9 ; 9') pour rendre cet insert 2 solidaire d'au moins un flasque (8 ; 8') et/ou raccordant les moyens (9 ; 9') pour rendre cet insert 2 solidaire des deux flasques (8 ; 8'), cette portion d'insert 2 étant immobile par rapport à ce ou ces flasques (8 ; 8').

En dehors de cette portion immobile de l'insert déformable 2, celui-ci 2 comporte des portions désolidarisées desdits flasques (8 ; 8') et mobiles par rapport à ces flasques (8 ; 8'), ceci par déformation de l'insert 2 et sous l'effet du soulèvement de l'objet à manutentionner.

Une caractéristique additionnelle consiste en ce que le dispositif de protection 1 comporte un berceau 10 conçu pour recevoir, intérieurement, l'organe O de l'engin de manutention et défini, d'une part, par le logement 40 que comporte le moyen 4 pour coopérer avec cet organe O et à l'intérieur duquel 40 cet organe O est destiné à venir se loger et, d'autre part, par des découpes (11 ; 11') que comportent chacun des flasques (8 ; 8') et à l'intérieur desquelles (11 ; 11') cet organe O est destiné à venir se loger.

Une telle découpe (11 ; 11') présente une forme et/ou des dimensions qui correspondent au moins en partie à celles de l'insert déformable 2, plus particulièrement au logement 40 que comporte cet insert 2.

Tel que mentionné ci-dessus, le dispositif de protection 1 comporte au moins un moyen 7 pour positionner ce dispositif 1 par rapport à l'organe O de l'engin de manutention.

En fait, c'est, plus particulièrement, au moins un flasque (8 ; 8') qui comporte, alors, un tel moyen 7 pour positionner le dispositif 1 par rapport à l'organe O.

On observera que ce moyen 7 pour positionner est constitué, soit par une butée d'arrêt, soit (et de préférence comme visible sur les figures en annexe) par un prolongement 70 (plus particulièrement sous forme d'une aile ou analogue), que comporte un tel flasque (8 ; 8'), et qui s'étend en partie à l'intérieur du berceau 10, voire encore dans le plan d'un tel flasque (8 ; 8').

Un tel moyen 7 pour positionner le dispositif de protection 1 est conçu pour prendre appui latéralement contre l'organe O de l'engin de manutention, ceci dès la mise en place du dispositif de protection 1 sur cet organe O.

La présence d'un tel moyen 7 pour positionner ledit dispositif de protection 1 confère, alors, à la découpe (11 ; 11') d'un flasque (8 ; 8') une forme asymétrique.

Un mode préféré de réalisation consiste en ce que chaque flasque (8 ; 8') comporte un tel moyen 7 pour positionner le dispositif de protection 1.

En fait et tel que visible sur les figures en annexe, ces moyens 7 pour positionner sont agencés, d'une part et pour l'un 8 des flasques (8 ; 8'), à une extrémité du berceau 10 et d'un côté de ce berceau 10 et, d'autre part et pour l'autre flasque 8', à l'autre extrémité de ce berceau 11 et du côté opposé de ce berceau 10.

Selon une autre caractéristique, le dispositif de protection 1 comporte, encore, au moins une entretoise 12 raccordant les deux flasques parallèles (8 ; 8').

C'est, plus particulièrement, entre une telle entretoise 12 et l'insert déformable 2 que vient alors se loger ledit câble C.

Tel que mentionné ci-dessus, le dispositif de protection 1 comporte au moins un moyen 6 pour immobiliser le dispositif de protection 1 par rapport au câble C.

C'est, plus particulièrement, une telle entretoise 12 qui comporte, alors, un tel moyen 6 pour immobiliser lequel 6 s'étend à partir d'une telle entretoise 11 et en direction de l'insert déformable 2.

Tel que visible sur les figures en annexe, ce moyen 6 pour immobiliser peut être constitué par un linguet d'immobilisation ou analogue.

Finalement, le dispositif de protection 1 est réalisé en au moins une pièce (de préférence en une seule pièce, notamment par moulage) et/ou en au moins un matériau, notamment de type synthétique. Selon un mode de réalisation préféré, ce dispositif 1 est réalisé en polyamide, notamment un polyamide de type 66.

## Revendications

1. Dispositif (1) de protection d'un câble (C), équipant ou destiné à équiper un objet à manutentionner, ce dispositif (1) comportant un insert déformable (2), destiné à être interposé entre ce câble (C) et un organe (O) que comporte un engin de manutention de cet objet, et comportant un moyen (3) pour recevoir ce câble (C) ainsi qu'un moyen (4) pour coopérer avec cet organe (O).

2. Dispositif de protection (1) selon la revendication 1, **caractérisé par le fait que** l'insert déformable (2) présente une forme au moins en partie arquée, voire en arc de cercle.

3. Dispositif de protection (1) selon l'une quelconque des revendications précédentes, **caractérisé par le fait que** le moyen (3) pour recevoir le câble (C) est défini sur au moins une portion externe de l'insert (2), notamment sur au moins une portion externe de la partie arquée de l'insert (2), tandis que le moyen (4) pour coopérer avec l'organe (o) est défini sur au moins une portion interne de cet insert (2), notamment sur au moins une portion interne de cette partie arquée de l'insert (2).

4. Dispositif de protection (1) selon l'une quelconque des revendications précédentes, **caractérisé par le fait que** le moyen (3) pour recevoir le câble (C), respectivement le moyen pour (4) coopérer avec l'organe (O) de l'engin de manutention, comporte un logement (30 ; 40) à l'intérieur duquel est destiné à venir se positionner ce câble (C), respectivement cet organe (O).

5. Dispositif de protection (1) selon la revendication 4, **caractérisé par le fait que** le logement (30) du moyen (3) pour recevoir le câble (C) est délimité par des bords latéraux (31) dans lesquels sont ménagées des échancrures (32).

6. Dispositif de protection (1) selon l'une quelconque des revendications précédentes, **caractérisé par le fait que** l'insert (2) comporte au moins un moyen (5) pour prendre appui latéralement contre l'organe (O) que comporte l'engin de manutention.

7. Dispositif de protection (1) selon l'une quelconque des revendications précédentes, **caractérisé par le fait qu'**il comporte au moins un moyen (6) pour immobiliser le dispositif de protection (1) par rapport au câble (C).

8. Dispositif de protection (1) selon l'une quelconque des revendications précédentes, **caractérisé par le fait qu'**il comporte au moins un moyen (7) pour positionner le dispositif de protection (1) par rapport à l'organe (O) de l'engin de manutention.

9. Dispositif de protection (1) selon l'une quelconque des revendications précédentes, **caractérisé par le fait qu'**il comporte, d'une part, deux flasques parallèles (8 ; 8') entre lesquels est positionné ledit insert déformable (2) et, d'autre part, au moins un moyen (9 ; 9') conçu pour rendre ledit insert déformable (2) solidaire d'au moins un tel flasque (8 ; 8').

10. Dispositif de protection (1) selon la revendication 9, **caractérisé par** le fait le dispositif (1) comporte un berceau (10) conçu pour recevoir, intérieurement, l'organe (O) de l'engin de manutention et défini, d'une part, par un logement (40) que comporte le moyen (4) pour coopérer avec cet organe (O) et à l'intérieur duquel cet organe (O) est destiné à venir se loger et, d'autre part, par des découpes (11; 11') que comportent chacun des flasques (8 ; 8') et à l'intérieur desquelles cet organe (O) est destiné à venir se loger.

11. Dispositif de protection (1) selon les revendications 8 et 10, **caractérisé par le fait qu'**au moins un flasque (8 ; 8') comporte un moyen (7) pour positionner le dispositif (1) par rapport à l'organe (O) de l'engin de manutention et que ce moyen (7) pour positionner est constitué, soit par une butée d'arrêt, soit par un prolongement que comporte un tel flasque (8 ; 8') et qui s'étend en partie à l'intérieur du berceau (10) du dispositif (1).

12. Dispositif de protection (1) selon les revendications 7 et 9, **caractérisé par le fait que** le dispositif (1) comporte au moins une entretoise (12), raccordant les deux flasques parallèles (8 ; 8'), et comportant au moins un moyen pour immobiliser (6) le dispositif de protection (1) par rapport au câble (C).
